# EUROPÄISCHE PATENTSCHRIFT

(11) **EP 2 358 246 B1**
(45) Veröffentlichungstag und Bekanntmachung des Hinweises auf die Patenterteilung: **02.05.2018**
(21) Anmeldenummer: 09778766.7
(22) Anmeldetag: 29.09.2009
(51) Int. Cl.: A47J 36/06

(54) **KOCHGESCHIRRDECKEL MIT ZARGE**
Crockery lid with frame
Couvercle d'ustensile de cuisson doté d'un châssis

(30) Priorität: 18.12.2008 DE 102008022037
(43) Veröffentlichungstag der Anmeldung: 24.08.2011
(73) Patentinhaber: Silit-Werke GmbH & Co. KG, 88499 Riedlingen (DE)
(72) Erfinder: ROTH, Klaus, 88527 Unlingen (DE); FINGERLE, Hans, D-88499 Riedlingen (DE); SCHOBLOCH, Jochen, 88422 Bad Buchau (DE)
(74) Vertreter: Grünecker Patent- und Rechtsanwälte PartG mbB
(86) Internationale Anmeldenummer: PCT/EP2009/006999
(87) Internationale Veröffentlichungsnummer: WO 2010/069415

(56) Entgegenhaltungen:
- EP-A- 1 468 933
- DE-U1- 29 513 989
- JP-A- 2000 005 076
- US-A1- 2003 116 572
- US-A1- 2007 221 651

## Beschreibung

Die Erfindung betrifft einen Kochgeschirrdeckel mit einem Deckelgrundkörper und einer umlaufende Zarge gemäß Oberbegriff des Anspruchs 1 und wie bekannt aus JP 2000005076 A, sowie ein Verfahren zu dessen Herstellung gemäß Oberbegriff des Anspruchs 11.

Deckel für Kochgeschirre sind in vielfältigen Ausführungsformen bekannt. Unter anderem sind Deckel bekannt, die mit einer umlaufenden Zarge gefasst sind. Unter dem Begriff Zarge sollen hier solche "Einfassungen" verstanden werden, die nicht nur eine reine Dicht- oder Schutzfunktion ausüben, wie z.B. bei einer Dichtung oder einem Kantenschutzring im engeren Sinne, sondern solche die darüber hinaus eine Auflagefläche zur Auflage auf dem zugehörigen Behälter und/oder zur Ablage bzw. Aufbewahrung umfassen. Es ist bereits bekannt, derartige Zargen aus Gründen der Ästhetik und zugunsten einer möglichst freien Formgebung, aber auch wegen günstiger Abdicht- und Anpassungseigenschaften aus Kunststoff zu fertigen.

So ist z.B. aus der G 8209965 ein Kochtopfdeckel aus Metall mit einem Kantenschutzring aus einem Elastomer mit einer nach unten ragenden Zarge bekannt. Der Kantenschutzring wird durch Klippbefestigung mit dem Deckel verbunden. Alternativ kann der Metalldeckel in einer Kunststoffspritz- oder -pressmaschine mit dem Kantenschutzring versehen werden. Dieser Deckel hat jedoch den Nachteil, dass die Verbindung zwischen dem Deckelgrundkörper und dem Kantenschutzring bzw. der Zarge nicht in jedem Fall wasserdicht ist. Ein solcher Deckel lässt sich unter Umständen nicht zufriedenstellend reinigen und kann daher Schmutznester beherbergen. Außerdem ist man bei der Materialauswahl und bei der Formgebung der Zarge bzw. des Kantenschutzrings je nach Befestigungsvariante eingeschränkt.

Die US 2003/116572 A1 beschreibt einen Kochgeschirrdeckel mit einer um einen Deckelgrundkörper umlaufenden Dichtung, die in einer umlaufenden Nut des Deckelgrundkörpers eingepasst ist und mit diesem verklebt ist.

Die US 2007/221651 A1 beschreibt einen Kochgeschirrdeckel mit einer den Deckelrand umschließenden Dichtung oder mit einem Dichtelement mit rundem oder ovalem Querschnitt, das auf der Unterseite des Deckelrands aufgeklebt sein kann.

Der Erfindung liegt somit die Aufgabe zugrunde, einen Kochgeschirrdeckel bereitzustellen, der hinsichtlich Herstellung und Funktion verbessert ist.

Diese Aufgabe wird durch einen Kochgeschirrdeckel nach Anspruch 1 und ein Verfahren nach Anspruch 11 gelöst. Dadurch ist es möglich, Form und Material der Zarge an gestalterische und technische Anforderungen vielfältig anzupassen. Gleichzeitig ermöglicht die Vergussmasse eine dauerhaft stabile und wasserdichte Verbindung.

Außerdem ist in der Zarge ein Aufnahmebereich für einen umfänglichen Randabschnitt des Deckelgrundkörpers ausgebildet, wobei das Volumen des Aufnahmebereichs größer ist als das Volumen des Randabschnitts, und ein im Aufnahmebereich vorgesehener Zwischenraum zwischen dem Deckelgrundkörper und der Zarge ist mit der Vergussmasse gefüllt. Dadurch lässt sich eine besonders stabile und dichte Verbindung herstellen.

Erfindungsgemäß ist an der Zarge oder an dem Deckelgrundkörper eine Dichtkante ausgebildet, die während des Einbringens der Vergussmasse zwischen die Zarge und den Deckelgrundkörper als Fließbarriere für die Vergussmasse wirkt. Dadurch kann ein Bereich zwischen der Zarge und dem Deckelgrundkörper kontrolliert mit Vergussmasse gefüllt werden und ein unkontrolliertes Eindringen bzw. Austreten von Vergussmasse verhindert werden.

Günstigerweise ist die Kontur der Vergussmasse im Wesentlichen an die Konturen des Deckelgrundkörpers (2) und der Zarge (3) angepasst. Dadurch wird eine besonders gute Dichtwirkung der Verbindung erzielt.

In einer besonders vorteilhaften Ausführungsform sind der Deckelgrundkörper und die Zarge mit einer wasserdichten Vergussmasse verbunden. Dies ermöglicht eine besonders einfache und gründliche Reinigung des Deckels.

Vorzugsweise umfasst die Zarge eine um die Vergussmasse umlaufend angeordnete Auflagefläche zur Auflage auf ein Kochgeschirr, wobei die ausgehärtete Vergussmasse so hart ist, dass sie sich beim Aufsetzen des Deckels auf das Kochgeschirr im Wesentlichen nicht verformt. Dies ermöglicht einen stabilen und gleichzeitig flachen, und somit optisch ansprechenden Deckelrand.

Günstigerweise ist der Deckelgrundkörper transparent, insbesondere aus Glas. Dies ermöglicht eine visuelle Kontrolle während der Speisenzubereitung.

Vorzugsweise besteht die Vergussmasse aus einem für Lebensmittel unbedenklichen Material. In diesem Fall kann die Vergussmasse auf der Deckelinnenseite teilweise frei liegen.

Vorzugsweise hat die Oberfläche der Vergussmasse die Form eines konkaven Meniskus. Dies ermöglicht einen optisch besonders ansprechenden Übergang zwischen dem Deckelgrundkörper und der Zarge und ist unter hygienischen Gesichtspunkten vorteilhaft.

Vorzugsweise besteht die Zarge aus einem für Lebensmittel unbedenklichen Material, insbesondere aus Kunststoff, Harz oder einem anderen härtenden Material. Dies erübrigt eine zusätzliche Beschichtung für den Einsatz im Küchenbereich.

Bei einer bevorzugten Ausgestaltung umfasst die Zarge ein Silikonmaterial. In diesem Fall werden Geräusche beim Aufsetzten des Deckels auf einen Topf oder eine feste Unterlage gedämpft. Aufgrund der thermischen Eigenschaften von Silikon kann der Deckel an der Zarge im heißen Zustand angefasst werden, ohne dabei Verbrennungen hervorzurufen.

Günstigerweise ist zwischen der Dichtkante und dem Deckelgrundkörper ein Entlüftungsspalt vorgesehen. Dadurch kann zu verdrängende Luft aus dem Zwischenraum entweichen.

Die Aufgabe wird ebenso gelöst durch ein Verfahren nach Anspruch 11.

Dadurch können Form und Material der Zarge an gestalterische und technische Anforderungen besonders gut angepasst werden. Gleichzeitig ermöglicht die Vergussmasse eine dau- erhaft stabile und wasserdichte Verbindung.

Erfindungsgemäß wird die Vergussmasse zwischen den Deckelgrundkörper und die Zarge eingebracht, wobei eine in der Zarge ausgebildete Dichtkante in Kombination mit dem Deckelgrundkörper, oder eine an dem Deckelgrundkörper ausgebildete Dichtkante in Kombination mit der Zarge, als Fließbarriere für die Vergussmasse wirkt. Dadurch kann ein Bereich zwischen der Zarge und dem Deckelgrundkörper kontrolliert mit Vergussmasse gefüllt werden.

Vorzugsweise wird die Vergussmasse in einem fließfähigen und/oder kriechfähigen Zustand zwischen Deckelgrundkörper und Zarge eingebracht, wobei sie sich an die Konturen des Deckelgrundkörpers und der Zarge anpasst. Dadurch wird eine besonders gute Dichtwirkung der Verbindung erzielt.

Bevorzugte Ausführungsformen der Erfindung sind in der Zeichnung dargestellt und werden nachstehend erläutert, wobei die Beschreibung der ersten Ausführungsform auch für die weiteren Ausführungsformen zutrifft, sofern nicht anderslautend angegeben. Es zeigen:
- Figur 1: eine schematische Draufsicht auf einen erfindungsgemäßen Deckel;
- Figur 2: eine schematische Teilansicht einer ersten Ausführungsform des erfindungsgemäßen Deckels im Schnitt entlang der Linie A in der Figur 1;
- Figur 3: eine schematische Teilansicht des erfindungsgemäßen Deckels im Schnitt entlang der Linie B in der Figur 2;
- Figur 4: eine schematische Teilansicht einer zweiten Ausführungsform des erfindungsgemäßen Deckels im Schnitt entlang der Linie A in der Figur 1;
- Figur 5: eine schematische Teilansicht einer beispielhaften, nicht zur Erfindung gehörenden Variante eines Deckels im Schnitt entlang der Linie A in der Figur 1.

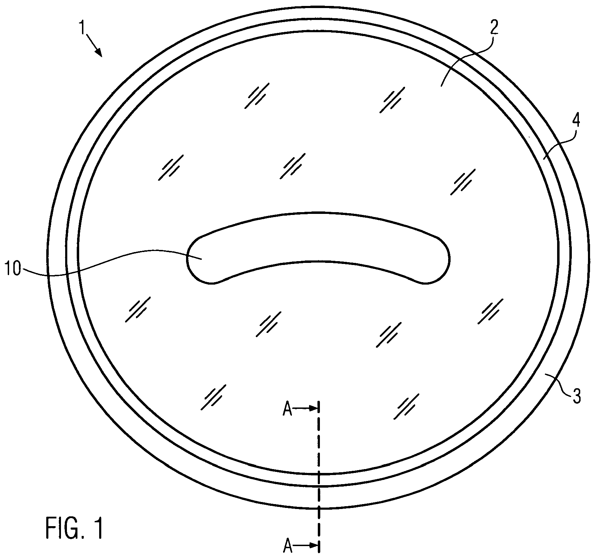

Figur 1 zeigt einen Kochgeschirrdeckel 1 mit einem Deckelgrundkörper 2 aus Glas, einer um dessen Randkantenbereich 2a umlaufenden Zarge 3 und einem Griff 10. Der Deckelgrundkörper 2 ist mittels einer Vergussmasse 4 mit der Zarge 3 verbunden.

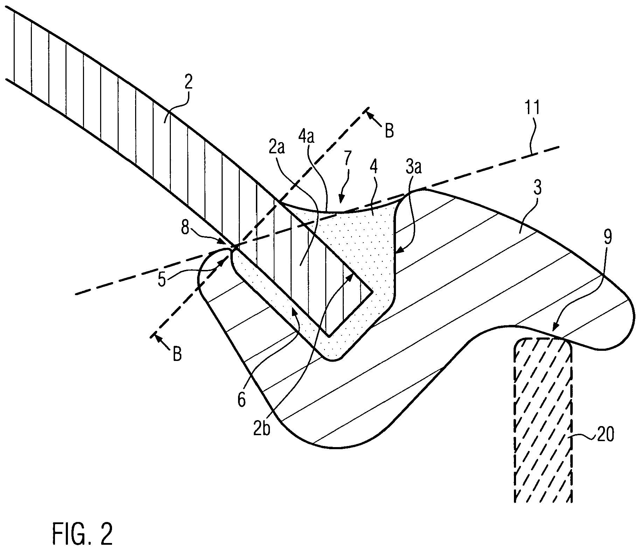

Die Zarge 3 kann als Kunststoffteil, z.B. im Spritzguss, hergestellt sein und weist in einer ersten Ausführungsform gemäß Figur 2 einen Aufnahmebereich 7 für den umfänglichen Randabschnitt 2a und die Vergussmasse 4 auf. Dabei wird der Aufnahmebereich 7 bevorzugt mit deutlichem Übermaß hergestellt, so dass der Zwischenraum 6 zwischen dem Deckelgrundkörper 2 und der Zarge 3 entsteht, der mit der Vergussmasse 4 gefüllt werden kann. Der Querschnitt des Aufnahmebereichs 7 entspricht gemäß Figur 2 näherungsweise dem von der Kontur der Zarge 3 und der Verbindungslinie 11 zwischen den oberen Rändern des Aufnahmebereichs 7 bzw. der Zarge 3 eingeschlossenen Bereich. Somit ist das Volumen des Aufnahmebereichs 7 größer als das Volumen des umfänglichen Randabschnitts 2a.

Der Deckelgrundkörper 2 und die Zarge 3 werden wasserdicht und dauerhaft über die Vergussmasse 4 miteinander verbunden. Beispielhaft sind die Verbindungsflächen 2b und 3a des Deckelgrundkörpers 2 bzw. der Zarge 3 dargestellt. Die Vergussmasse 4 füllt den Aufnahmebereich 7 im Wesentlichen aus, insbesondere aber den Zwischenraum 6. An dem deckelinnenseitigen, den Aufnahmebereich 7 begrenzenden Ende des Zwischenraums 6 ist in der Zarge 3 eine Dichtkante 5 ausgebildet. Diese verhindert, dass bei der Herstellung die noch fließfähige bzw. kriechfähige Vergussmasse 4 aus dem Zwischenraum 6 austritt.

Wie in Figur 2 angedeutet, ist zwischen dem Deckelgrundkörper 2 und der Dichtkante 5 ein kleiner Entlüftungsspalt 8 vorgesehen, der gerade so groß gewählt wird, dass Luft während des Einbringens der Vergussmasse 4 aus dem zu füllenden Zwischenraum 6 entweichen kann.

Auf der Unterseite der Zarge 3 ist eine Auflagefläche 9 zur Auflage auf einem gestrichelt angedeuteten Topf 20 ausgebildet. Die Auflagefläche 9 ist geneigt und ermöglicht dadurch, dass sich der Deckel 1 beim Aufsetzen bzw. Aufdrücken auf den Topf 20 auf diesem selbsttätig zentriert und diesen dicht verschließt. Gegebenenfalls kann der Deckel jedoch auch undicht aufgesetzt werden.

Der Deckel 1 ist Bestandteil eines Kochgeschirrs, wie z. B. eines Kochtopfs, einer Dampfgarers, eines Bräters oder einer Pfanne. Der Deckel 1 muss nicht, wie in Figur 1 dargestellt, rund sein. Denkbar sind auch elliptische Formen oder eckige Formen, insbesondere solche mit abgerundeten Kanten. Der Griff 10 könnte ebenso wie andere (nicht dargestellte) hinlänglich bekannte Anbauteile, wie z. B. Magnete, Membranen und Ventile, sowohl am Deckelgrundkörper 2 als auch an der Zarge 3 vorgesehen sein.

Der Deckelgrundkörper 2 besteht bevorzugt aus einem hitzebeständigen Glas. Ebenso denkbar sind hitzebeständige Kunststoffe, keramische Materialien, Metalllegierungen oder beliebige Kombinationen der genannten Materialien. Für die Anwendung als Kochgeschirr sind transparente, also durchsichtige oder durchscheinende Materialien vorteilhaft, um ein Kochen unter Sichtkontrolle zu ermöglichen. Jedoch ist diese Eigenschaft nicht zwingend erforderlich.

Die Zarge 3 besteht aus einem für Lebensmittel unbedenklichen Material, wie z. B. einem Silikonmaterial oder einem silikonhaltigen Material. Es können jedoch auch andere Kunststoffe aus der Gruppe der Duroplaste, Thermoplaste und Elastomere verwendet werden. Ebenso denkbar wären keramische Materialien oder Metalllegierungen oder Kombinationen aus den genannten Materialien. Das in Figur 2 im Querschnitt dargestellte Profil der Zarge 3 ist nur ein Beispiel einer Querschnittsgestaltung. Die Dichtkante 5 und die Auflagefläche 9 können ebenso davon abweichende Größenverhältnisse und Formen aufweisen. Ebenso kann das Profil der Zarge 3 entlang des Deckelumfangs variieren, z. B. an integrierten Griffen 10 oder Befestigungsstellen für Anbauteile.

Die Dichtkante 5 ist nicht zwingend erforderlich. Bei exakter Dosierung der Vergussmasse 4 kann darauf verzichtet werden. Auch der Entlüftungsspalt 8 ist nicht zwingend erforderlich. Eine sich beim Einbringen der Vergussmasse 4 gegebenenfalls bildende Raupe kann entfernt oder glatt gezogen werden. Die Dichtkante 5 ist jedoch vorteilhaft, da mit ihr die Flächenpressung zwischen Zarge 3 und Deckelgrundkörper 2 erhöht werden kann, so dass das Austreten von Vergussmasse 4 zuverlässig vermieden wird.

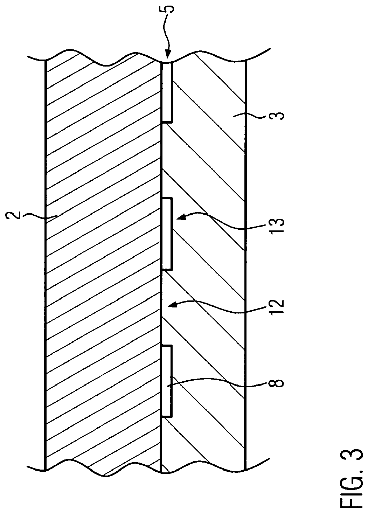

Wie Fig. 3 erkennen lässt, kann die Dichtkante 5 gezahnt ausgebildet sein, so dass sich entlang der Dichtkante 5 Bereiche 12, in denen der Deckelgrundkörper 2 auf der Dichtkante 5 aufliegt, mit Bereichen 13, in denen zwischen der Dichtkante 5 und dem Deckelgrundkörper 2 der Entlüftungsspalt 8 vorgesehen ist, abwechseln. Dadurch lässt sich während des Einbringens der Vergussmasse 4 eine einfache Positionierung des Deckelgrundkörpers 2 auf der Zarge 3 realisieren, ohne die Entlüftung des Zwischenraums 6 zu behindern. Anzahl und Form der Entlüftungsspalte 8 können dabei beliebig variiert werden. Ebenso ist es möglich, in der Zarge 3 keine Entlüftungsspalte 8 vorzusehen oder diese durch geeignete Entlüftungskanäle (nicht dargestellt) in der Zarge 3 zu ersetzen, so dass der Deckel 2 über den gesamten Umfang auf der Zarge 3 aufliegt. Der Anteil der Abschnitte 13 bzw. der Entlüftungsspalte 8 an der Länge bzw. am Umfang der Dichtkante 5 kann somit zwischen 0% (keine Bereiche 13 vorgesehen) und 100% (ein Entlüftungsspalt 8, keine Bereiche 12 vorgesehen) variieren. Er liegt bevorzugt zwischen 1% und 99% oder gegebenenfalls zwischen 10% und 90%.

Die Vergussmasse 4 besteht bevorzugt aus einem für Lebensmittel unbedenklichen Material. Diese Eigenschaft ist jedoch nur dann obligatorisch, wenn ein Teil der Vergussmasse 4 auf der Innenseite des Deckels 1 frei liegt, z. B. wenn die Dichtkante 5 nicht vorhanden ist, oder falls zu viel Vergussmasse 4 eingebracht wurde. Geeignete Materialien sind z. B. Kunststoff, Silikon und Harz, aber auch andere härtende Substanzen sowie Mischungen aus diesen Stoffen.

Während des Einbringens der Vergussmasse 4 ist diese fließfähig und/oder kriechfähig. Dadurch wird erreicht, dass der Zwischenraum 6 bis zur Dichtkante 5 mit der Vergussmasse 4 gefüllt wird. Dadurch dass sich die Vergussmasse 4 an die Konturen des Deckelgrundkörpers 2 und der Zarge 3 anpasst, wird eine mechanisch stabile und dauerhaft dichte Verbindung erzielt. Bei geeigneter Auswahl und Verarbeitung der Vergussmasse 4 ist die Verbindung nicht nur wasserdicht, sondern auch luftdicht. Dadurch wird das Entweichen von Wasserdampf und das Eindringen von Schmutz zwischen Zarge 3 und Deckelgrundkörper 2 zuverlässig vermieden.

Die Vergussmasse 4 hat an ihrer von außen sichtbaren Oberfläche 4a bevorzugt die Form eines konkaven Meniskus. Dazu müssen die Adhäsionskräfte zwischen der fließfähigen Vergussmasse 4 und dem Randkantenbereich 2a sowie der Zarge 3 größer sein als die Kohäsionskräfte der Vergussmasse 4. Dies kann zum Einen durch Verwendung von Materialien mit geeigneter Oberflächen- bzw. Grenzflächenspannung erreicht werden, zum Anderen durch eine entsprechend an die Materialien angepasste Formgebung des Deckelgrundkörpers 2 und der Zarge 3, insbesondere indem die Neigungen der an die Vergussmasse 4 angrenzenden Flächen 2b und 3a im Bereich der Oberfläche 4a angepasst werden. Für die Ausbildung eines konkaven Meniskus dürfen die Flächen 2b und 3a am Übergang zur Vergussmasse 4, je nach den beteiligten Oberflächen- bzw. Grenzflächenspannungen bzw. den Randwinkeln der Vergussmasse 4, eine Mindestneigung gegenüber der Horizontalen nicht unterschreiten.

Die konkave Meniskusform ergibt einen optisch besonders ansprechenden Übergang zwischen dem Deckelgrundkörper 2 und der Zarge 3 und ist unter hygienischen Gesichtspunkten vorteilhaft. Die Oberfläche 4a der Vergussmasse 4 kann bei Bedarf jedoch auch im Wesentlichen eben sein oder eine konvexe Meniskusform aufweisen.

Wie aus Figur 2 ersichtlich, ist die Vergussmasse 4 bzw. der Aufnahmebereich 7 innerhalb der Auflagefläche 9 angeordnet. Die ausgehärtete Vergussmasse 4 muss daher mindestens so hart sein, dass sie sich weder beim Aufsetzen des Deckels 1 auf eine Unterlage noch durch das Gewicht des Deckels 1 nennenswert verformt, und dass sie den dabei auftretenden Scherkräften widersteht.

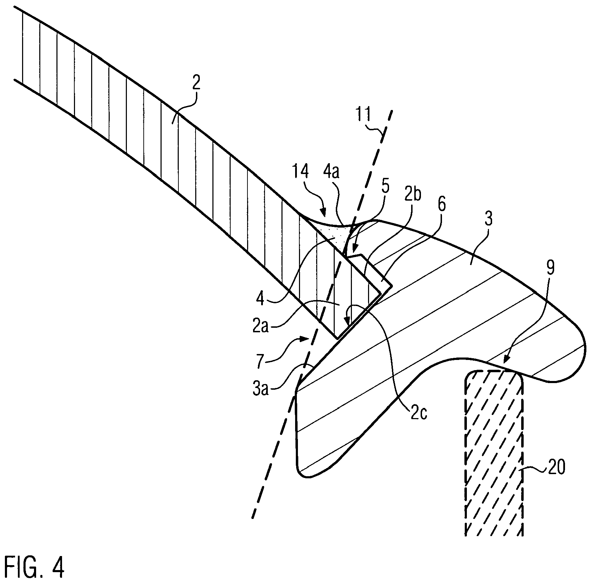

Die in der Figur 4 dargestellte zweite Ausführungsform unterscheidet sich von der ersten Ausführungsform hinsichtlich des Zargenprofils und des Verbindungsbereichs 14 zwischen dem Deckelgrundkörper 2 und der Zarge 3. Demnach ist an der Zarge 3 ebenfalls ein Aufnahmebereich 7 für den Randkantenbereich 2a des Deckelgrundkörpers 2 sowie eine Dichtkante 5 vorgesehen, wobei diese als Fließgrenze für die Vergussmasse 4 in Richtung des Aufnahmebereichs 7 wirkt. Im Aufnahmebereich 7 ist zwischen dem Randkantenbereich 2a und der Zarge 3 ein Zwischenraum 6 vorgesehen.

Die Vergussmasse 4 wird im Wesentlichen außerhalb des Aufnahmebereichs 7 in den Verbindungsbereich 14 zwischen dem Deckelgrundkörper 2 und der Zarge 3 eingebracht, wobei die dazwischen liegende Oberfläche 4a der Vergussmasse 4 bevorzugt die Form eines konkaven Meniskus einnimmt. Die Dichtkante 5 verhindert bei der Herstellung, dass die noch fließfähige bzw. kriechfähige Vergussmasse 4 in den Aufnahmebereich 7 bzw. den Zwischenraum 6 eintritt. Somit bildet die Dichtkante 5 diesbezüglich eine Grenze zwischen dem Aufnahmebereich 7 und dem Verbindungsbereich 14. Die zweite Ausführungsform wäre alternativ auch ohne die Dichtkante 5 und/oder den Zwischenraum 6 möglich. Die Dichtkante 5 ist jedoch vorteilhaft, da mit ihr die Flächenpressung zwischen der Zarge 3 und dem Deckelgrundkörper 2 erhöht werden kann, so dass das Eindringen der Vergussmasse 4 in den Aufnahmebereich 7 zuverlässig vermieden werden kann. Bei der zweiten Ausführungsform sind an der Dichtkante 5 vorzugsweise keine Entlüftungsspalte 8 bzw. Abschnitte 13 vorgesehen. Gemäß Figur 4 ist der Zwischenraum 6 nur an einer Fläche des Randkantebereichs 2a ausgebildet, nämlich an der Oberfläche 2b, während die umfängliche Seitenfläche 2c und die Fläche 3a der Zarge 3 formschlüssig verbunden sind. Ein Formschluss zwischen Randkantenbereich 2a und Zarge 3 ist jedoch nicht zwingend notwendig. Ebenso können Form und Lage des Zwischenraums 6 bzw. Lage und Anzahl der Kontaktflächen zwischen Randkantenbereich 2a und Zarge 3 variieren. Bei der ersten und der zweiten Ausführungsform können der Deckelgrundkörper 2 und die Zarge 3 nur durch einen Stoffschluss oder in Kombination mit einem Formschluss miteinander verbunden sein. Die Vergussmasse 4 bzw. die Dichtkante 5 könnte in entsprechender Weise, entweder zusätzlich oder alternativ, auch an der Unterseite des Deckelgrundkörpers 2 angeordnet werden. Hierfür müssten der Deckelgrundkörper 2 und die Zarge 3 beim Herstellen der Verbindung lediglich um 180° gekippt werden.

Die Zarge 3 besteht bevorzugt aus einem flexiblen Material, wie z. B. einem Silikonmaterial. Dies begünstigt die Dichtwirkung der Dichtkante 5 und ermöglicht die Montage von Zargenprofilen 3, die den Randbereich 2a teilweise umschließen.

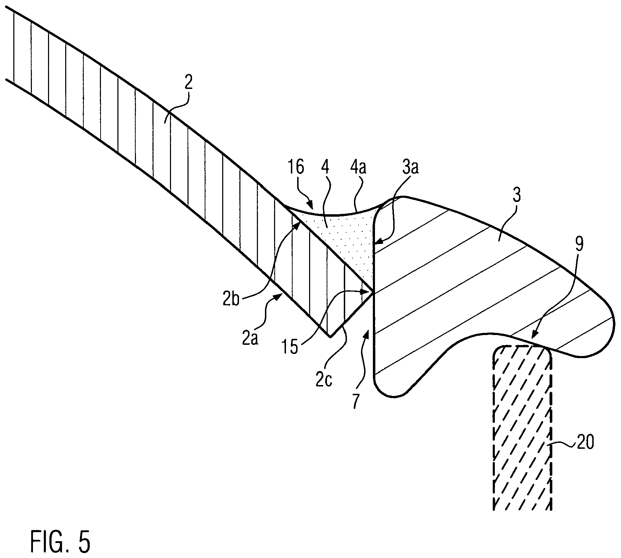

Die in der Figur 5 dargestellte beispielhafte, nicht zur Erfindung gehörenden Variante unterscheidet sich von den vorigen Ausführungsformen dadurch, dass am Randkantenbereich 2a eine umfängliche Dichtkante 15 vorgesehen ist, die im Zusammenwirken mit dem Aufnahmebereich 7 für den Randkantenbereich 2a, der im Beispiel von der nach innen weisenden Zargenfläche 3a gebildet wird, den Verbindungsbereich 16 für die Vergussmasse 4 nach unten hin, in Richtung der Fläche 2c, abdichtet. Im Beispiel wird der Verbindungsbereich 16 von der Oberfläche 2b des Randkantenbereichs 2a und der Fläche 3a oberhalb der Dichtkante 15 eingeschlossen. Die Flächen 2b und 3a sind so gegen die Horizontale geneigt, dass die Oberfläche 4a der Vergussmasse 4 im Wesentlichen die Form eines konkaven Meniskus einnimmt. Dadurch wird eine stabile und dichte, sowie optisch ansprechende Verbindung ermöglicht.

Die Vergussmasse 4 kann gegebenenfalls auch mehrere Flächen des Randkantenbereichs 2a und/oder der Zarge 3 miteinander verbinden, z. B. die Flächen 2c und 3a.

Um eine besonders gute Dichtwirkung der Dichtkante 15 durch Erhöhung der Flächenpressung auf den Aufnahmebereich 7 zu gewährleisten, werden der Deckelgrundkörper 2 und die Zarge 3 möglichst mit geringer Toleranz hergestellt, z. B. durch Schleifen des Randkantenbereichs 2a im Bereich der Dichtkante 15 bzw. durch Spritzguss der Zarge 3, wobei letztere bevorzugt aus einem starren oder nur geringfügig flexiblen Material gefertigt wird.

Der Aufnahmebereich 7 ist in Figur als ebene Fläche 3a ausgebildet. In diesem Fall stellt die Vergussmasse 4 im Wesentlichen einen reinen Stoffschluss her. Es sind jedoch auch andere Formen für den Aufnahmebereich 7 denkbar, die in Kombination mit der Dichtkante 15 eine gute Dichtwirkung ergeben, wie z. B. in der Zarge 3 entlang der Dichtkante 15 verlaufende Stufen oder Rillen. In diesem Fall könnte die Verbindung teils formschlüssig sein.

Zugunsten einer mechanisch stabilen, stoffschlüssigen Verbindung von Deckelgrundkörper 2 und Zarge 3 besteht die Vergussmasse 4 insbesondere beim dritten Ausführungsbeispiel bevorzugt aus einem starr aushärtenden Material, so dass sich die Lage des Deckelgrundkörpers 2 und der Zarge 3 zueinander bei normaler Beanspruchung des Deckels 2, wie z. B. beim Aufsetzen des Deckels 1 auf einen Topf 20 im Wesentlichen nicht verändert.

Die Merkmale der beschriebenen Ausführungsformen lassen sich beliebig kombinieren. Beispielsweise könnten auf der Ober- bzw. Unterseite des Deckels 1 unterschiedliche Ausführungsformen realisiert werden.

Ein erfindungsgemäßer Kochgeschirrdeckel gemäß der ersten Ausführungsform lässt sich wie folgt herstellen:
Ein Deckelgrundkörper 2 und eine umlaufende Zarge 3 werden mit Hilfe einer nicht näher beschriebenen Vorrichtung in einer Montageposition gehalten. Anfangs, z.B. nach dem Anmischen der Vergussmasse 4, wird fließfähige bzw. kriechfähige Vergussmasse 4 in den Aufnahmebereich 7 und in den Zwischenraum 6 zwischen dem Deckelgrundkörper 2 und der Zarge 3 eingebracht. Hierbei entweicht Luft durch den Entlüftungsspalt 8 aus dem Zwischenraum 6, so dass die Vergussmasse 4 bis zur Dichtkante 5 vordringt. Da die Dichtkante 5 als Fließbarriere ausgebildet ist, kann die Vergussmasse 4 die Dichtkante 5 im Wesentlichen nicht passieren. Die fließfähige bzw. kriechfähige Vergussmasse 4 passt sich an die Konturen des Deckelgrundkörpers 2 und der Zarge 3 an und bildet nach Aushärtung, z. B. infolge einer chemischen Reaktion, einen zusammen hängenden Verbund, und somit eine wasserdichte Verbindung, die den Deckelgrundkörper 2 und die Zarge 3 nach Verfestigung der Vergussmasse 4 dauerhaft und mechanisch stabil verbindet.

Die Vergussmasse 4 wird bevorzugt so dosiert, dass ihre Oberfläche 4a an in geeigneter Weise geneigte Abschnitte des Deckelgrundkörpers 2 und der Zarge 3 grenzt, so dass sich ihre Oberfläche 4a in Form eines konkaven Meniskus ausbildet.

Je nach Form des Aufnahmebereichs 7 kann es vorteilhaft sein, die Vergussmasse 4 teilweise oder vollständig in den Aufnahmebereich 7 einzubringen, bevor der Deckelgrundkörper 2 und die Zarge 3 in ihre endgültige Montageposition gebracht werden. Dadurch kann gegebenenfalls der Entlüftungsspalt 8 bzw. das Entlüften des Zwischenraums 6 entfallen und/oder die Montage erleichtert werden.

Beim Herstellen der zweiten und dritten Ausführungsform werden der Deckelgrundkörper 2 und die Zarge 3 bevorzugt so zueinander positioniert, dass beim Einbringen der Vergussmasse 4 bereits eine ausreichende Dichtwirkung der Dichtkante 5 bzw. 15 gewährleistet ist.

Bei dem erfindungsgemäßen Kochgeschirrdeckel 1 ist der Deckelgrundkörper 2 und die Zarge 3 nicht durch Aufklipsen oder formschlüssiges Aufstecken, sondern mit der Vergussmasse 4 mechanisch stabil und wasserdicht verbunden, wobei es durch die Verwendung der Vergussmasse 4 möglich ist, Material und Form der Zarge 3 an unterschiedliche ästhetische und technische Anforderungen anzupassen und trotzdem eine dichte, stabile und hygienisch einwandfreie Verbindung zu schaffen.

## Patentansprüche

1. Kochgeschirrdeckel (1) umfassend einen Deckelgrundkörper (2) und eine umlaufende Zarge (3), wobei der Deckelgrundkörper (2) durch eine Vergussmasse (4) mit der Zarge (3) verbunden ist, wobei in der Zarge (3) ein Aufnahmebereich (7) für einen umfänglichen Randabschnitt (2a) des Deckelgrundkörpers (2) ausgebildet ist, wobei das Volumen des Aufnahmebereichs (7) größer ist als das Volumen des Randabschnitts (2a), und wobei ein im Aufnahmebereich (7) vorgesehener Zwischenraum (6) zwischen dem Deckelgrundkörper (2) und der Zarge (3) mit der Vergussmasse (4) gefüllt ist, **dadurch gekennzeichnet, dass** in der Zarge (3) oder an dem Deckelgrundkörper (2) eine Dichtkante (5, 15) ausgebildet ist, die während des Einbringens der Vergussmasse (4) zwischen die Zarge (3) und den Deckelgrundkörper (2) als Fließbarriere für die Vergussmasse (4) wirkt.

2. Kochgeschirrdeckel nach Anspruch 1, **dadurch gekennzeichnet, dass** die Kontur der Vergussmasse (4) im Wesentlichen an die Konturen des Deckelgrundkörpers (2) und der Zarge (3) angepasst ist.

3. Kochgeschirrdeckel nach Anspruch 1 oder 2, **dadurch gekennzeichnet, dass** der Deckelgrundkörper (2) und die Zarge (3) mit einer wasserdichten Vergussmasse (4) verbunden sind.

4. Kochgeschirrdeckel nach einem der vorigen Ansprüche, **dadurch gekennzeichnet, dass** die Zarge (3) eine um die Vergussmasse (4) umlaufend angeordnete Auflagefläche (9) zur Auflage auf ein Kochgeschirr (20) umfasst, und dass die ausgehärtete Vergussmasse (4) so hart ist, dass sie sich beim Aufsetzen des Deckels (1) auf das Kochgeschirr (20) im Wesentlichen nicht verformt.

5. Kochgeschirrdeckel nach einem der vorigen Ansprüche, **dadurch gekennzeichnet, dass** der Deckelgrundkörper (2) transparent, und insbesondere aus Glas ist.

6. Kochgeschirrdeckel nach einem der vorigen Ansprüche, **dadurch gekennzeichnet, dass** die Vergussmasse (4) aus einem für Lebensmittel unbedenklichen Material besteht.

7. Kochgeschirrdeckel nach einem der vorigen Ansprüche, **dadurch gekennzeichnet**, die Oberfläche (4a) der Vergussmasse (4) die Form eines konkaven Meniskus hat.

8. Kochgeschirrdeckel nach einem der vorigen Ansprüche, **dadurch gekennzeichnet, dass** die Zarge (3) aus einem für Lebensmittel unbedenklichen Material besteht, insbesondere aus Kunststoff, Harz oder einem anderen härtenden Material.

9. Kochgeschirrdeckel nach einem der vorigen Ansprüche, **dadurch gekennzeichnet, dass** die Zarge (3) Silikonmaterial umfasst.

10. Kochgeschirrdeckel nach Anspruch 1, **dadurch gekennzeichnet, dass** zwischen der Dichtkante (5) und dem Deckelgrundkörper (2) ein Entlüftungsspalt (8) vorgesehen ist.

11. Verfahren zur Herstellung eines Kochgeschirrdeckels (1) nach Anspruch 1, die folgenden Schritte umfassend;
- Bereitstellen eines Deckelgrundkörpers (2) und einer Zarge (3); und
- Verbinden des Deckelgrundkörpers (2) und der Zarge (3) durch Füllen des Zwischenraums (6) mit einer Vergussmasse (4), wobei die Vergussmasse (4) zwischen den Deckelgrundkörper (2) und die Zarge (3) eingebracht wird, **dadurch gekennzeichnet, dass** eine an der Zarge (3) ausgebildete Dichtkante (5) in Kombination mit dem Deckelgrundkörper (2), oder eine an dem Deckelgrundkörper (2) ausgebildete Dichtkante (15) in Kombination mit der Zarge (3), als Fließbarriere für die Vergussmasse (4) wirkt.

12. Verfahren nach Anspruch 11, **dadurch gekennzeichnet, dass** die Vergussmasse (4) in einem fließfähigen und/oder kriechfähigen Zustand zwischen Deckelgrundkörper (2) und Zarge (3) eingebracht wird und sich dabei an die Konturen des Deckelgrundkörpers (2) und der Zarge (3) anpasst.

## Claims

1. Cookware lid (1) comprising a lid base body (2) and a circumferential frame (3), wherein the lid base body (2) is connected to the frame (3) by a casting compound (4), wherein a receiving region (7) is formed in the frame (3) for an extensive edge section (2a) of the lid base body (2), wherein the volume of the receiving region (7) is greater than the volume of the edge section (2a), and wherein an intermediate space (6), provided in the receiving region (7), between the lid base body (2) and the frame (3) is filled with the casting compound (4), **characterised in that** a sealing edge (5, 15) is formed in the frame (3) or on the lid base body (2) which acts as a flow barrier for the casting compound (4) when the casting compound (4) is introduced between the frame (3) and the lid base body (2).

2. Cookware lid according to claim 1, **characterised in that** the contour of the casting compound (4) is substantially adapted to the contours of the lid base body (2) and the frame (3).

3. Cookware lid according to claim 1 or 2, **characterised in that** the lid base body (2) and the frame (3) are connected to a water-tight casting compound (4).

4. Cookware lid according to any one of the preceding claims, **characterised in that** the frame (3) has a support surface (9), arranged circumferentially around the casting compound (4), to be supported on cookware (20) and **in that** the hardened casting compound (4) is so hard that it does not substantially deform when the lid (1) is placed on the cookware (20).

5. Cookware lid according to any one of the preceding claims, **characterised in that** the lid base body (2) is transparent and in particular made of glass.

6. Cookware lid according to any one of the preceding claims, **characterised in that** the casting compound (4) consists of a material that is non-hazardous for foodstuffs.

7. Cookware lid according to any one of the preceding claims, **characterised in that** the surface (4a) of the casting compound (4) has the form of a concave meniscus.

8. Cookware lid according to any one of the preceding claims, **characterised in that** the frame (3) consists of a material that is non-hazardous for foodstuffs, in particular of plastic, resin or another hardening material.

9. Cookware lid according to any one of the preceding claims, **characterised in that** the frame (3) comprises silicone material.

10. Cookware lid according to claim 1, **characterised in that** a venting gap (8) is provided between the sealing edge (5) and the lid base body (2).

11. Method for manufacturing a cookware lid (1) according to claim 1, comprising the following steps;
- providing a lid base body (2) and a frame (3); and
- connecting the lid base body (2) and the frame (3) by filling the intermediate space (6) with a casting compound (4), wherein the casting compound (4) is introduced between the lid base body (2) and the frame (3), **characterised in that** a sealing edge (5) formed on the frame (3) in combination with the lid base body (2), or a sealing edge (15) formed on the lid base body (2) in combination with the frame (3), acts as a flow barrier for the casting compound (4).

12. Method according to claim 11, **characterised in that** the casting compound (4) is introduced in a flowable and/or creeping state between lid base body (2) and frame (3) and is adapted to the contours of the lid base body (2) and the frame (3).

## Revendications

1. Couvercle d'ustensile de cuisine (1) comprenant un corps de base de couvercle (2) et un cadre périphérique (3), dans lequel le corps de base de couvercle (2) est lié au cadre (3) par une masse de remplissage (4), dans lequel est formée dans le cadre (3) une zone réceptrice (7) pour une section de bord périphérique (2a) du corps de base (2) du couvercle, dans lequel le volume de la zone réceptrice (7) est plus grand que le volume de la section de bord (2a) et dans lequel une zone intermédiaire (6) prévue dans la zone réceptrice (7) entre le corps de base (2) du couvercle et le cadre (3) est remplie de la masse de remplissage (7), **caractérisé en ce qu'**il est prévu dans l'encadrement (3) ou dans le corps de base (2) du couvercle une arête d'étanchéité (5, 15) qui agit comme barrière à l'écoulement pour la masse de remplissage (4) pendant l'introduction de la masse de remplissage (4) entre le cadre (3) et le corps de base (2) du couvercle.

2. Couvercle d'ustensile de cuisine selon la revendication 1, **caractérisé en ce que** le contour de la masse de remplissage (4) est adaptée sensiblement aux contours du corps de base (2) du couvercle et du cadre (3).

3. Couvercle d'ustensile de cuisine selon la revendication 1 ou 2, **caractérisé en ce que** le corps de base (2) du couvercle et le cadre (3) sont liés par une masse de remplissage étanche à l'eau (4).

4. Couvercle d'ustensile de cuisine selon l'une quelconque des revendications précédentes, **caractérisé en ce que** le cadre (3) comprend une surface d'appui (9) agencée sur la périphérie autour de la masse de remplissage (4) pour l'appui sur un ustensile de cuisine (20) et la masse de remplissage durcie (4) est assez dure pour ne pas se déformer sensiblement lors de l'application du couvercle (1) sur l'ustensile de cuisine (20).

5. Couvercle d'ustensile de cuisine selon l'une quelconque des revendications précédentes, **caractérisé en ce que** le corps de base (2) du couvercle est transparent et est constitué en particulier de verre.

6. Couvercle d'ustensile de cuisine selon l'une quelconque des revendications précédentes, **caractérisé en ce que** la masse de remplissage (4) est formée d'un matériau neutre pour les produits alimentaires.

7. Couvercle d'ustensile de cuisine selon l'une quelconque des revendications précédentes, **caractérisé en ce que** la surface supérieure (4a) de la masse de remplissage (4) a la forme d'un ménisque concave.

8. Couvercle d'ustensile de cuisine selon l'une quelconque des revendications précédentes, **caractérisé en ce que** le cadre (3) est constitué d'un matériau neutre pour les produits alimentaires, en particulier d'une matière plastique, d'une résine ou d'un autre matériau durcissant.

9. Couvercle d'ustensile de cuisine selon l'une quelconque des revendications précédentes, **caractérisé en ce que** le cadre (3) comprend un matériau siliconé.

10. Couvercle d'ustensile de cuisine selon la revendication 1, **caractérisé en ce qu'**il est prévu entre l'arête d'étanchéité (5) et le corps de base (2) du couvercle un intervalle d'aération (8).

11. Procédé de fabrication d'un couvercle d'ustensile de cuisine (1) selon la revendication 1, comprenant les étapes suivantes :
- préparation d'un corps de base de couvercle (2) et d'un cadre (3) ; et
- liaison du corps de base (2) du couvercle et du cadre (3) par remplissage de l'espace intermédiaire (6) par une masse de remplissage (4), dans lequel la masse de remplissage (4) est introduite entre le corps de base (2) du couvercle et le cadre (3), **caractérisé en ce qu'**une arête d'étanchéité (5) formée sur le cadre (3) en combinaison avec le corps de base (2) du couvercle ou une arête d'étanchéité (15) formée sur le corps de base (2) du couvercle en combinaison avec le cadre (3) agit comme barrière à l'écoulement pour la masse de remplissage (4).

12. Procédé selon la revendication 11, **caractérisé en ce que** la masse de remplissage (4) est introduite à l'état liquide et/ou fluable entre le corps de base (2) du couvercle et le cadre (3) et s'adapte en l'occurrence aux contours du corps de base (2) du couvercle et du cadre (3).
